# EUROPEAN PATENT APPLICATION

(11) **EP 1 684 157 A1**
(43) Date of publication of application: **26.07.2006**
(21) Application number: 05107297.3
(22) Date of filing: 08.08.2005
(51) Int. Cl.: G06F 1/30

(54) **Circuit for controlling power supply to electronic processing circuits, and especially electronic processing circuits having a redundant architecture**

(30) Priority: 29.09.2004 IT SV20040035
(71) Applicant: Alstom S.p.A., 12038 Savigliano (CN) (IT)
(72) Inventor: Balandi, Giuseppe dr., 40051, BOLOGNA (IT); Sanzani, Pierluigi dr., I-30134, BOLOGNA (IT)
(74) Representative: Karaghiosoff, Giorgio Alessandro

(57) **Abstract**

A circuit for controlling power supply to electronic circuits, and particularly electronic data processing circuits, which have a processing section with at least one memory in which at least one processing program is loaded, a power source/converter (2) being provided (referring to Figures 1 to 3), which provides the power signal to the electronic processing circuits, whereas said power control circuit (3) has a section (103) for checking the supply voltage, which generates a signal for enabling/disabling the processing section (1, 1A, 1B).

According to the invention, the power control circuit comprises a configuration memory (203) which contains data for configuring the processing program or parts of the processing program which data is critical for the execution of said processing program, which memory (203) communicates with the processing section (1, 1A, 1B), whereas the check section (103) enables or disables access to the configuration memory (203) by the processing section (1, 1A, 1B) or communication between the configuration memory (203) and the processing section (1, 1A, 1B), otherwise it forces said configuration memory to send signals for disabling the processing section (1, 1A, 1B) or for setting the processing section when the supply voltage/s for the processing section do not correspond, within given tolerances, to the correct supply voltages for said processing section.

## Description

The invention relates to a circuit for controlling power supply to electronic circuits, and particularly electronic data processing circuits, which electronic circuits have a processing section with at least one memory in which at least one processing program is loaded, said processing section having an input for the signals to be processed and an output for already processed signals, as well as an input for at least one predetermined supply voltage, an output of a power source being connected to said supply voltage input, and said output being connected to an input of the power control circuit, whereas said power control circuit has a section for checking the supply voltage, which generates a processing section enabling/disabling signal.

Such circuits are known and widely used both to protect the components of processing sections and to ensure that processing results are not somehow affected by less than optimal operating conditions thereof, particularly overvoltage or undervoltage conditions.

The typical operation of prior art control circuits consists in inhibiting power supply to the processing section or, by sending control signals to the processing section, in taking over control therefrom and forcing said processing section to generate predetermined output error signals.

In electronic control systems for applications having particularly high safety requirements, commercial hardware for making processing sections has been used to date in combination with a system configuration having a so-called two-out-of-two safety architecture. This architecture provides twice as many processing sections or at least twice as many CPUs of the processing section, and parallel processing thereby.

Processed signals are also checked for errors, as the signals provided by the two processing sections or by the two CPUs of the processing section may be compared to be only used for further execution of the control process when perfect correspondence therebetween is ascertained. Otherwise, the comparison result may be used to generate an error signal or a control signal to terminate the control process and restore the control system and the controlled system or process to a safe condition.

In prior art, systems having a two-out-of-two safety architecture must have two separate power supply sections and separate control and diagnostics devices for such power supply sections, to fully benefit from the advantages of this architecture. This involves a more complex configuration of such systems, as well as a cost increase, associated to the provision of two power supply sections.

A typical application of control systems as described hereinbefore, which widely use two-out-of-two architectures is railway or tramway signaling. In these systems, the transition from electromechanical architectures to electronic architectures, i.e. the introduction of computers, has required a wide use of the two-out-of-two architecture in multiple devices or sections of the system and particularly whenever a processing section having safe operation requirements is used. In such systems, the provision of twice as many power supplies involves high costs. Particularly, the two-out-of-two architecture of processing sections is widely used because it allows to use commercial hardware in those systems, i.e. third-party hardware that is ordinarily used to make devices of widespread use, thereby avoiding technical efforts and costs associated to the production of dedicated hardware.

The invention has the object of improving a circuit for controlling power supply to electronic circuits as described hereinbefore, to obviate the drawbacks of prior art circuits, to reduce costs and to leave the advantages of the two-out-of-two architecture unchanged.

The invention fulfils the above objects by providing a circuit for controlling power supply to electronic circuits, and particularly electronic data processing circuits as described hereinbefore, which includes a configuration memory containing data for configuring the processing program or parts of the processing program, which data is critical for the execution of said processing program, which memory communicates with the processing section, whereas the check section enables or disables access to the configuration memory by the processing section or communication between the configuration memory and the processing section, otherwise it forces said configuration memory to send signals for disabling the processing section or for setting the processing section to an operating condition in which it generates an output signal corresponding to a safe condition, when the supply voltage/s for the processing section do not correspond, within given tolerances, to the correct supply voltages for said processing section respectively.

The particular configuration of the inventive control circuit makes such circuit independent of specific processing and power supply sections, and may be used in combination with any kind of electronic circuit, provided that the latter has at least one input for power supply and for configuration or control data.

This circuit is provided in a control system that includes two processing sections with a two-out-of-two architecture or in a processing section that includes two CPUs with a two-out-of-two architecture, and is composed of two independent check sections, each check section controlling a dedicated configuration memory, which is connected to one of the two processing sections or to one CPU, whereas the two processing sections or the two CPUs share a common power source or a common power supply section.

The provision of two check sections and two configuration memories allows to achieve the same power control advantages that would be achieved by using two separate power supplies, for the two processing sections and for the two CPUs. A control system having a single power source has a generally lower cost than a control system with two separate power supplies.

Further, when electronic control systems are to be provided with multiple processing sections or with architectures of processing sections operating with more than two CPUs, the control circuit designed to safely handle power control for more than two CPUs simply involves the provision of as many check sections and configuration memories as there are processing sections or CPUs.

In accordance with a further characteristic, each check section of the control circuit of this invention is composed of two voltage comparators, designed to detect overvoltages and undervoltages respectively, the outputs of such comparators being connected to a trigger device which detects permanent or temporary voltage changes at its input and generates a stable enabling or disabling signal. Therefore, the control circuit performs its disabling function also in response to voltage transients above or below the voltage range in which the supply voltage is deemed to be correct.

According to an improvement, each check section further includes two switches that are controlled by the processing section to generate voltage changes which act as test signals to check the overvoltage and undervoltage detection functions.

A reset control is provided to restore the control circuit to its initial condition, in which it enables access to the configuration memories, once a diagnostic test has been performed on the circuit, i.e. once an overvoltage or undervoltage condition has been detected, which has caused access to the configuration memory to be disabled.

In this case, when two processing sections or two CPUs are provided, these have a switch control timing channel to ensure that the voltage change for testing the check sections is only transmitted to one of the two check sections at a time, while the untested check sections is held in operation.

The invention further relates to a data processing system, particularly a system for controlling or monitoring railway, tramway or subway signaling systems, which includes a power control circuit according to this invention.

Further improvements of the invention will form the subject of the dependent claims.

The characteristics of the invention and the advantages derived therefrom will appear more clearly from the following description of an embodiment shown in the accompanying drawings, in which:
Fig. 1 is a general block diagram of a power control circuit in combination with an electronic processing circuit according to the present invention.
Fig. 2 shows a variant embodiment of the power control circuit as shown in Fig. 1.
Fig. 3 shows an embodiment of the section for checking one power supply voltage. This circuit may be generalized to check multiple power supply voltages.
FIG. 4 shows an embodiment of the configuration memory.
Fig. 5 is a block diagram similar to that of Fig. 1, in which the voltage checking circuit is used in combination with a processing circuit having a two-out-of-two architecture, said circuit being also configured with a two-out-of-two architecture.
Fig. 6 shows the embodiment of a construction scheme of the supply voltage check section of the circuit as shown in Fig. 5. Particularly, the circuit of Fig. 6 is a variant of the circuit of Fig. 3, in which two different supply voltages (5V and 3.3V) are checked.
Fig. 7 shows the two-out-of-two configuration memory for the control circuit of the above Figures 5 and 6.
Figs. 8 to 10 show schemes, at different detail levels, of an exemplary embodiment of the supply voltage control circuit according to the invention and particularly designed for a railway signaling system, i.e. for a unit designed to convert data coding protocols between various operating units of a railway system and a central logic computer that is programmed to handle system logics.

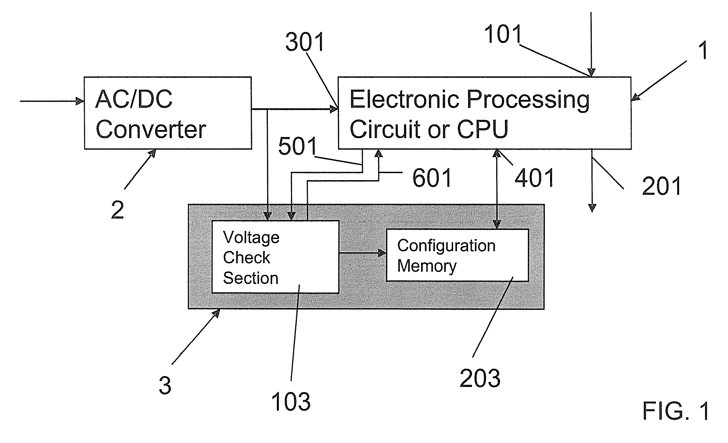

Referring to Figures 1 to 3, the power control circuit of this invention is shown in its application to a data processing circuit 1. Though not shown in detail, this processing circuit 1 appears to have at least one input 101 for data to be processed and at least one output 201 for already processed data. Furthermore, it has at least one processing unit, e.g. a CPU and a processing logic which may be provided herein as a processing program to be stored in a memory which is accessed by the CPU. The processing circuit 1 also has at least one or more inputs 301 for a supply voltage or for several different supply voltages. These voltages are delivered by a power supply which generally but without limitation is or comprises an AC/DC converter, designated in the figure by numeral 2. The input power signal to the power source/converter 2 is transformed and rectified to generate an output power signal having at least one suitable supply voltage for the processing circuit 1. When needed, a power source/converter 2 may be also provided which is capable of generating several different power supply voltages, each delivered to a separate output.

The output signal from the power source/converter 2 is also supplied to the input of a power control circuit 3 which comprises a supply voltage check section 103 and a storage unit 203, named configuration memory.

The supply voltage check section 103 checks that the output voltage from the power source/converter 2 corresponds to the supply voltage required for proper power supply to the processing circuit 1 and has means for generating a signal which enables/disables access to the configuration memory 203 by the processing circuit 1.

In accordance with a predetermined embodiment, the configuration memory 203 is supplied with power by a separate DC/DC converter and the supply voltage check section 103 activates or enables or disables power supply to the configuration memory 203, thereby allowing or preventing access thereto by the processing circuit 1.

The enabling/disabling signal or control is generated by the check section 103 on the basis of the supply voltage check results. When the supply voltage from the output of the power source/converter 2 is correct, within given tolerances, then the configuration memory 203 is allowed to be accessed by the processing circuit 1, whereas when the supply voltage is lower or higher than the proper supply voltage above a given tolerance value, access to the configuration memory by the processing circuit 203 is disabled.

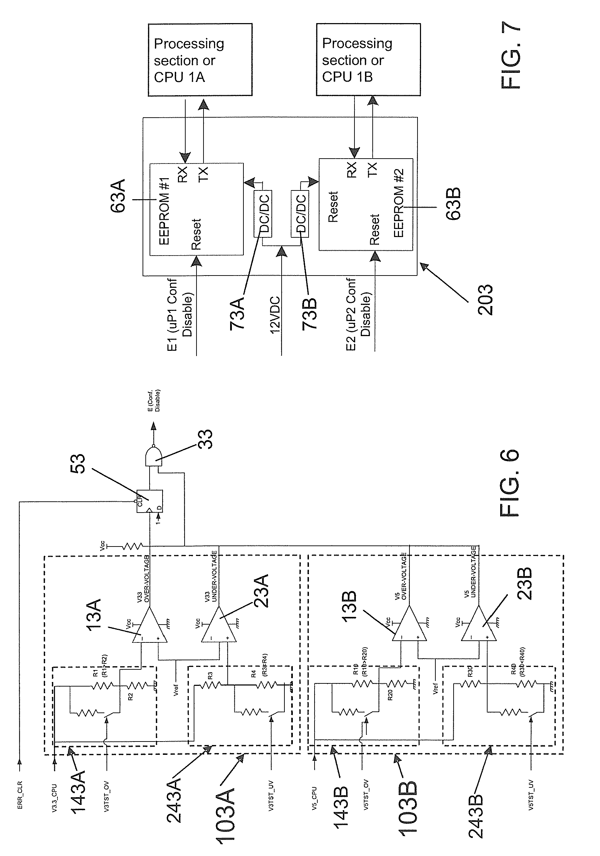

The configuration memory 203 has the function to provide the data processing circuit with critical data for executing the processing program. These may be, for instance, configuration data required for program execution, or codes or numeric keys required for execution of steps or routines of the processing program or critical parts of the processing program. When access to the configuration memory 203 by the processing circuit 1 is disabled, the program cannot be executed and the processing circuit 1 generates an output error signal. The processing program may be further arranged to generate predetermined error signals corresponding to predetermined consequences. For instance, in a control unit of a system, the generated error signal may correspond to a control for restoring the system to a known safety condition. In a railway traffic control system, for instance, the error signal may be a signal for turning on a stop red light and for disabling a section of the track to stop the train running on said section and prevent any further motion thereof. A practical detailed example will be described herein with reference to Figures 7 to 9.

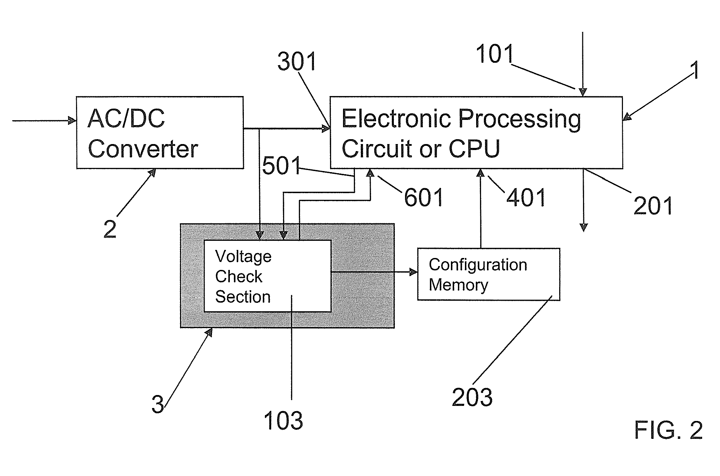

In the variant of Figure 2 the configuration memory 203 is separate from the check section.

Generally, and particularly in microprocessor-based or computerized control or monitoring system, the processing program, here a control and monitoring program, may be advantageously split into two components. One component is a universal logic engine which is unrelated to specific systems, but has general routines for status sensing and control of operating units of the system and routines for management of said operating units according to system control and monitoring rules which are defined by control and monitoring protocols imposed on the specific application of the system both by the physical rules governing the system operating modes and by safety rules for the execution of the operating steps of the system. A further component provides the configuration of the system, i.e. the number of operating units in the system and the type of operating relationships between the operating units and/or the status and control message coding protocols whereby the operating units communicate with the central control and monitoring section and vice versa. These configuration components are required for executing the system logics program, hence if they are not present, the processing section generates an error signal for not being able to execute the system logics program.

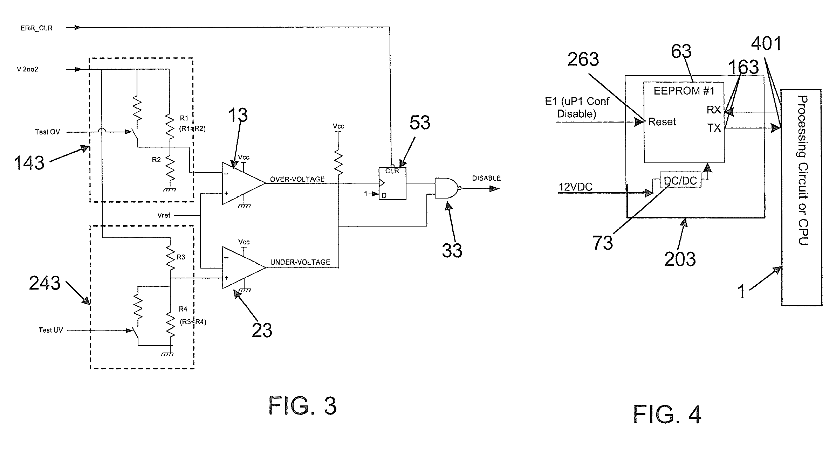

According to the feature of the embodiment of Figure 2, by providing a universal system logic program component in a memory of said processing section and by providing the configuration components as defined above in the configuration memory, the advantage may be obtained of further standardizing the construction of the processing section, which may be substantially identical for a number of different applications, whereas the specific components for the different systems only need to be stored in a dedicated memory. Besides reducing the costs, this considerably simplifies the configuration of control systems and of this voltage control circuit, as the configuration memory 203 may be provided as a replaceable component of the control circuit board and/or of the processing section circuit board or as an external circuit having a port for communication and mechanical coupling with a corresponding and complementary communication and mechanical coupling port of the voltage control circuit board or the processing section circuit board. A number of different constructions may be provided, e.g. the communication port and the memory may be of any currently known type, USB mass storages, PCMCI boards, Memory Sticks, Secure Digital or any element similar to hardware keys for connection to parallel, serial or dedicated ports. A construction embodiment of the configuration memory 203 will be described below, with reference to Figure 4, which is particularly suitable for use in railway traffic control systems.

Fig. 3 shows a wiring diagram of the supply voltage check section of the circuit as shown in the previous figures.

The supply voltage check section 103 comprises two voltage comparators 13 and 23, one of which 13 is designed to check for overvoltages OV, with reference to the proper nominal supply voltage value provided to the comparator by means of a reference signal Vref., whereas the other comparator 23 is designed to check for undervoltages UV with reference to the same reference signal Vref, representing the proper nominal supply voltage value.

The comparator outputs 13 and 23 are connected to a logic element 53, in this case a flip-flop device having error holding features.

According to yet another feature, networks of resistors are provided upstream from each of the two comparators, which resistors are associated each to a static switch 143, 243, which is controlled by the processing section 1 or by the CPU thereof, and whose closure causes a test signal to be applied to the input of the corresponding comparator 13, 23, having a voltage higher than the proper nominal supply voltage value (TEST OV) and a voltage lower than the proper nominal supply voltage value (TEST UV) respectively, to simulate the two overvoltage and undervoltage conditions.

Also, the check section has, downstream from the comparators and downstream from the flip-flop device 53, a by-pass device 33, which allows, either at the end of the test or when a real supply voltage error occurs, to keep the supply voltage control circuit in the condition in which it disables communication between the processing section 1 and the configuration memory 203.

The flip-flop error holding device 53 can transmit a stable error signal, thereby disabling communication between the configuration memory 203 and the processing section 1 even when the over- or undervoltage condition of the power signal is present and sensed for short periods, i.e. when such condition occurs in peaks or transients.

When an overvoltage OV or an undervoltage UV is detected, the corresponding comparator 13 or 23 provides an Overvoltage or Undervoltage signal to the flip-flop device 53 and the device 33 generates a Disable signal to disable communication between the configuration memory 203 and the processing section 1 or the corresponding CPU.

Once the test is completed, the malfunctioning conditions are cleared off and communication between the configuration memory 203 and the processing section 1 may be restored by applying a Reset signal (ERRCLR) to the flip-flop 53.

As shown in the figures, the check section 103 provides separate power supply for the two comparators by dedicated DC/DC converters which draw the power signal from a common power source/ AC/DC converter, which is not shown in detail and may be the same power source/converter 2 that supplies power to the processing section or CPU thereof or a separate power source/converter.

Figure 4 shows the construction of the configuration memory 203 according to the embodiment of Figure 2, i.e. in which the configuration memory is an separated both mechanically and electrically from the power control circuit and from the processing circuit 1 or its CPU.

The configuration memory 203, in this embodiment, includes an EEPROM 63, which has in input 263 for a disable and reset signal coming from the output of the device 33 of the voltage check section 3. A two-way communication port, i.e. allowing reception and transmission 163 is connected to a corresponding port 401 of the processing section or CPU 1 to allow the processing section or the CPU 1 to retrieve critical configuration data and/or program routines for proper execution of the program loaded in the memory of the processing circuit 1 or in the memory associated to the CPU 1. Also, the EEPROM 63 has an input for a supply voltage provided by a dedicated DC/DC converter 73 which receives at its input the same power signal as provided to the check section 103.

As mentioned above, the configuration memory 203 may be provided in any form, either on the circuit board of the check section or on the circuit board of the processing section 1 or even in the form of an external storage circuit, to be electrically or mechanically connected to one of the boards of the two sections 103 or 1 by appropriate connectors, e.g. similar in construction to hardware keys or the like. By this arrangement, configuration data may be transferred to and stored in the EEPROM memory in a separate device, provided with a special communication port and, should a fault occur to the memory or should storage data require updating, the configuration memory might be inexpensively, readily and safely replaced with a new configuration memory.

As mentioned in the introductive description, the advantages of this invention are optimized when, for safe operation purposes, the processing circuit is designed with a so-called two-out-of-two architecture, i.e. when the processing circuit has two processing sections operating in parallel to carry out the same operations. In this case, the control circuit of the invention obviates the provision of two separate power sources/converters for each of the two processing sections or CPUs, thereby only requiring at least the provision of twice as many check sections 103.

As a further improvement, the configuration memory 203 also may have a two-out-of-two configuration, with two memories operating in parallel, each connected to one of the two processing sections or one of the two CPUs.

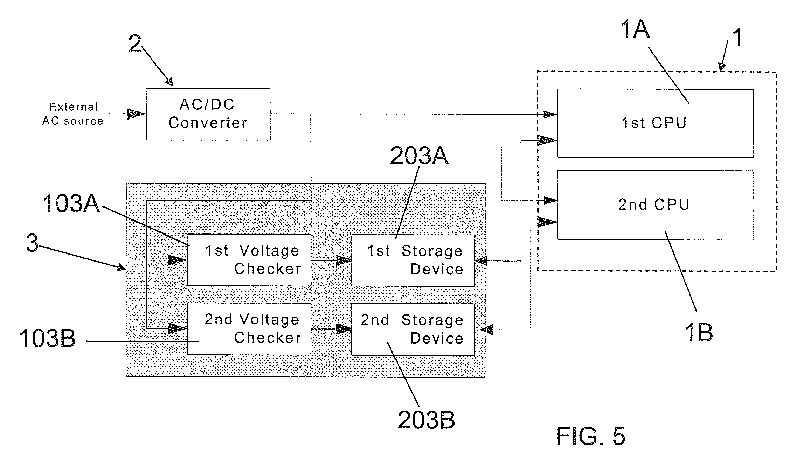

Such condition is shown in Figure 5, which is a scheme similar to that of Figure 1.

The processing circuit 1 comprises two processing sections or CPUs, designated as 1A and 1B. The two processing sections or CPUs 1A and 1B are supplied with power from the same common output of the power source/AC/DC converter 2.

The supply voltage control circuit 3 comprises two separate check sections 103A and 103B, each operating independently of the other and controlling the operations of enabling and disabling communication with or access to a configuration memory 203A and 203B by one of the two processing sections or one of the two CPUs 1A and 1B, a check section and a configuration memory being uniquely and stably associated to each other and to one of the processing sections or one of the CPUs.

Two processing sections or two CPUs 1A and 1B are provided, which operate in parallel and are each associated to a dedicated and unique supply voltage check section 103A and 103B, which cooperates with one unique configuration memory 203A and 203B.

Advantageously, as described in greater detail hereafter, each assembly consisting of the supply voltage check section, the configuration memory and the corresponding processing section or CPU operates and has all the features as defined in detail with reference to the previous embodiment, in which the processing circuit only had one processing section or CPU, i.e. had a single configuration.

The test cycle is also provided with a two-out-of-two architecture, however the two processing sections or CPUs 1A and 1B are required to be synchronized to perform the test at different times, therefore the two processing sections or CPUs 1A and 1B shall have a communication line for their mutual synchronization. Such line is already provided in two-out-of-two configurations, the processing program being typically executed simultaneously by the two processing sections or CPUs and the data provided by the outputs thereof being compared to ensure correctness thereof, an error message being transmitted in case of inconsistency between output data. However, this is a normal operation mode in two-out-of-two architectures. The synchronization line between the two processing sections or CPUs of a two-out-of-two circuit must be provided anyway, particularly when the processing program is cyclically executed with predetermined cycle times, whereby both processing sections or CPUs must perform the same cycle simultaneously. This synchronization line may be also obviously used for the synchronization of test cycles, otherwise a dedicated line may be provided for such test cycle synchronization function of the supply voltage control circuit.

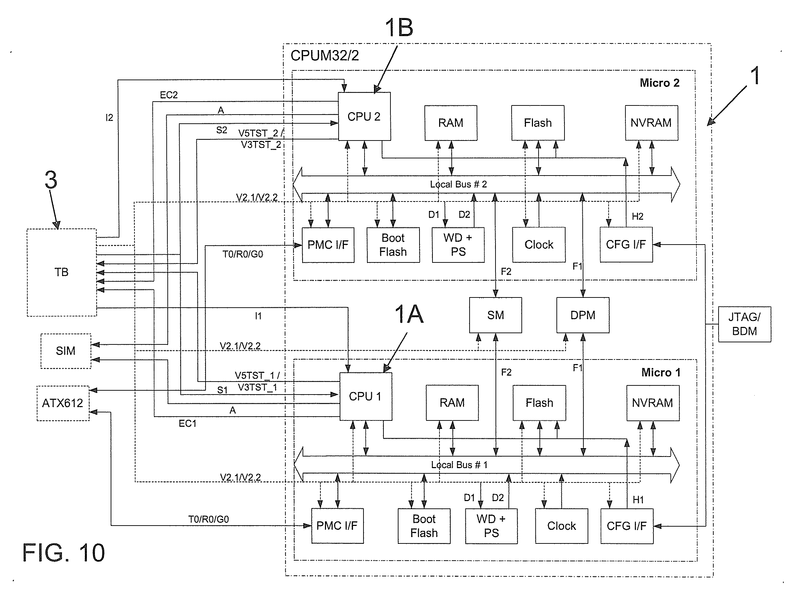

Figure 6 shows the wiring diagram of the components that form the check section 103 of the supply voltage control circuit 3, which is able to sense two supply conditions from the AC/DC converter 2 through the signal 301. These supply conditions are given by the voltages of 3.3V and 5V respectively which are used by the two microprocessors 1A and 1B of Figure 10. Please note that each check section 103A and 103B is exactly identical to the circuit of Figure 3, which may be further generalized when more supply conditions are provided.

Like in Figure 3, each check section 103A and 103B has two networks of resistors each associated to a static switch 143 and 243, which is designed to send an Overvoltage Test signal (Test OV) and an Undervoltage Test signal (Test UV) to each of the check sections by the corresponding processing section or the corresponding CPU 1A and 1B.

The operation of each of the two check sections 103A and 103B is exactly the same as described with reference to the embodiment of Figure 3. The error signal E (conf. Disable) at the output of the device 33 is shared by the two check sections 103A and 103B and is generated when one of the two check sections 103A and 103B senses a supply Overvoltage or Undervoltage condition. Such signal disables access to the configuration memory, whereby the processing circuit produces an error signal.

Referring now to Figure 7, the configuration memory may also advantageously have a two-out-of-two construction, and include two memories, each being supplied with power by a DC/DC converter, which retrieves the power supply signal from that provided to the corresponding check section 103A and 103B. Each of the two memories communicates independently with its respective processing section of the two CPUs 1A and 1B. In these conditions, a supply overvoltage or undervoltage being sensed by at least one of the two check sections 103A and 103B causes, with the utmost safety, an error signal to be generated by the control circuit and to disable access by at least one of the two processing sections or the two CPUs 1A and 1B to the corresponding memory. Therefore, when the output data of the processing sections or CPUs are compared, at least one of these will be in an error condition or its output data will be different from that of the other, whereby processing will not be deemed reliable.

Figure 7 shows an embodiment of the two-out-of-two configuration memory 203, derived from the simple configuration memory that is shown in the embodiment of Figure 4. The two-out-of-two configuration memory 203 has two EEPROMs 63A and 63B, each being supplied with power by a dedicated DC/DC converter 73A and 73B. Each of the two memories has an input 263 for the disable signal and a communication port 163 whereby it is connected to one of the two processing sections or one of the two CPUs 1A or 1B.

Please note that the use of a configuration memory having a two-out-of-two architecture may not be limited to the example of Figures 5 and 6, in which the processing circuit and the check section have a two-out-of-two configuration. The two-out-of-two architecture of the configuration memory 203 may be also used in the application as shown in Figures 1 to 3. Here, for instance, both memories 63A and 63B of the embodiment of Fig. 7 may be connected to the same processing section or CPU, one of them being only provided, whereas the configuration data or the program parts critical for execution of the processing program may be stored partly in the memory 63A and partly in the memory 63B, so that, even in this condition, disabled access to at least one of the two memories 63A and 63B causes the processing section or CPU 1 to be unable to execute the processing program. Other alternative examples of use of the two-out-of-two architecture for the configuration memory may be provided, in combination with a simple processing circuit and with a simple supply voltage check section, as shown in Figures 1 to 3.

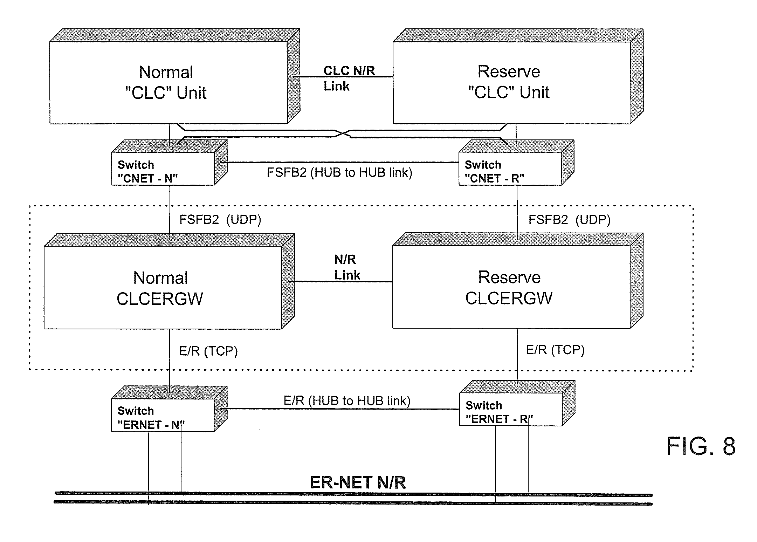

Figures 8 to 10 show a particular embodiment of the voltage control circuit when used in a computerized railway traffic control system.

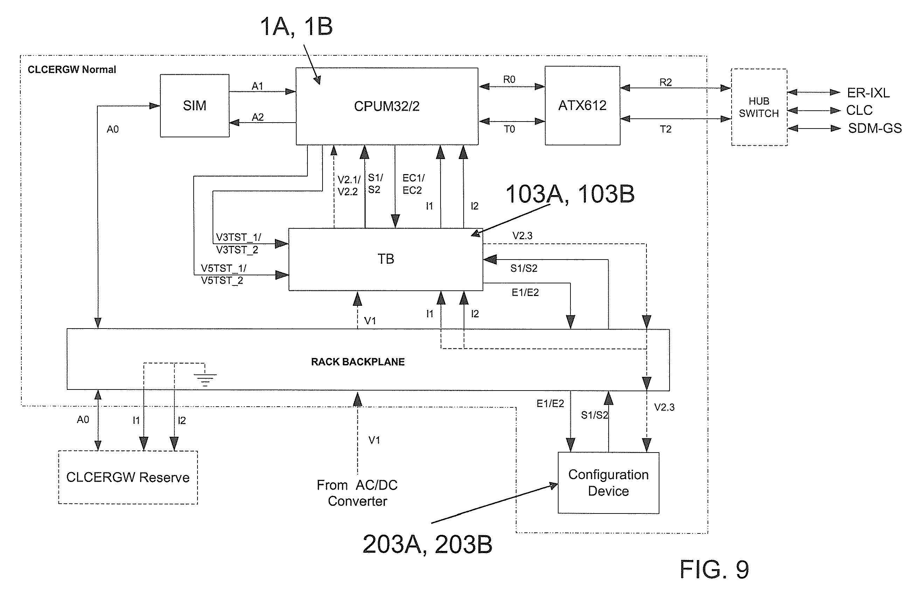

Such type of system relates to a radio-signaling application. System logic is determined as a function of the states of yard elements by the central logic computer, known as CLC, which also processes the information to be transmitted to the trains. Information is transmitted to the trains by the Radio Block Centre (RBC). Both the CLC and the RBC are made with safety principles that allow them to be used in railway applications, and particularly in this application the interface to the RBC has been standardized thanks to an agreement among manufacturers. The CLC communicates by using the FSFB/2 proprietary protocol, whereas the RBC communicates by using the standard Euroradio protocol. The diagram of Figure 9 shows the first detail level of the internal architecture of the CLCERGW unit (Normal or Reserve) which adapts data between the CLC protocol (FSFB/2) and the RBC protocol (Euroradio). The Normal CLCERGW and Reserve CLCERGW units are each provided with a safety 2 out of 2 architecture and are duplicated to increase the protocol conversion function availability. Protocol conversion is an important step, allowing to connect the CLC to operating units produced by several different manufacturers, which provide Euroradio coded state data and receive Euroradio coded controls. This conversion step is of the utmost importance and must be performed in a safe manner. Therefore, the execution of the processing program in each CLCERGW section is repeated on two microprocessor units operating in parallel, whose processing data are compared.

Considering the importance of the CLCERGW circuit and the potentially serious consequences in case of undetected malfunctioning, as shown in Figures 9 and 10, each CLCERGW circuit is intrinsically provided with a two-out-of-two configuration.

Figure 8 is a simplified block diagram of the simple CLCERGW unit. The processing section designated as CPUM32/2 is supplied with power by means of a supply voltage check circuit according to the invention, which is designated by 103, like in the previous figures, and a configuration memory 203 is provided, which is connected to the processing section CPUM32/2, the access to the configuration memory being controlled by the supply voltage check section 103.

The two-out-of-two architecture of the CPUM32/2 processing section is shown in Figure 10. In this case, the processing section has two microprocessors, Micro 1 and Micro 2, whose structure in shown in detail in the block diagram and each of which microprocessors has its own CPU, designated as CPU1 and CPU2 respectively.

Power supply to the two CPUs of the two microprocessors Micro 1 and Micro 2 is given by two different supply voltages (5V and 3.3 V), which are controlled by two circuits as shown in Figure 3, connected to each other. Therefore, the circuit of Figure 6 is the "voltage checker" which is shown in Figure 5 as block 103A for the Microprocessor 1A and as block 103B for the Microprocessor 1B. Particularly, the lines designated as S1 and S2 are used for communication of CPU1 (microprocessor 1A) and CPU2 (microprocessor 1B) with their respective configuration memories (block 203A for Microprocessor 1A, block 203B for Microprocessor 1B). The signals V2.1/V2.2 are CPUM32/2 supply signals (5V, 3.3V), shared by both microprocessors, whereas the signals V5TST 1, V3TST 1 and V5TST_2, V3TST_2 are the test signals transmitted by the CPU1 and CPU2 to the supply voltage control circuit 3. The signals V5TST x are 5V voltage test signals, and control the switches V5TST_OV and V5TST_UV, whereas the signals V3TST_x are 3.3V voltage test signals, and control the switches V3TST_OV and V3TST_UV. Therefore, each microprocessor independently controls 4 switches as well as their respective signals EC1 and EC2, which are error reset signals, to clear the error condition induced by CPU1 and CPU2 in the supply voltage control circuit 3 by means of test signals. The part of the program that resides in the CPUM32/2 processing section is loaded in the CFG I/F memory contained in each Micro 1 or 2.

This circuit has exactly the same operation as generally described with reference to the previous Figures. In case of supply over- or undervoltage to the processing section CPUM32/2, the supply voltage control circuit will disable communication of at least one of the two CPUs of the two Micros 1 and 2. This will prevent any configuration data of the conversion program, which in this case consists of the coding key required for conversion, from being loaded. In this condition, at least one of the two circuits CLCERGW will be in an error condition and its output data to the corresponding central logic computer N or R will be certainly not identical to that of the other. If no error condition is triggered now, the processing of the data converted by the two central computers CLC will provide different results, thereby leading to an error condition signal.

As shown in this example, the use of the two-out-of-two architecture is widespread in this kind of systems, whereby the provision of a regulated power supply with a two-out-of-two architecture that does not require two power sources / AC/DC converters is particularly interesting and cost-effective. Furthermore, the particular embodiment in which the configuration memory is provided as an electrically and mechanically separate circuit or device, and as a memory, is advantageous. This is particularly true when considering the separation of the processing program into a universally applicable part, unrelated to system's specifications and a part defined by the specific construction of the system and the operating units, the latter part being stored in the configuration memory. By this arrangement, the adaptation of the processing unit to the particular specifications of a system to be controlled by such processing unit may occur in a separate processing unit, having a port for communication with the configuration memory and in which separate processing unit the configuration data or the part of the program concerning the specific units of the system are prepared and stored in the configuration unit. The connection of this memory to the processing unit which controls the system and is responsible for the control and monitoring logic program will allow an automatic configuration of routines universally applied to the construction specifications of the system to be controlled.

## Claims

**1.** A circuit for controlling power supply to electronic circuits, and particularly electronic data processing circuits, which electronic circuits have a processing section with at least one memory in which at least one processing program is loaded, said processing circuit (1, 1A, 1B) having an input (101) for the signals to be processed and an output (201) for already processed signals, as well as an input (301) for at least one predetermined supply voltage, the output of a power source/converter (2) being connected to said supply voltage input (301), and said output being connected to an input of the power control circuit (3), whereas said power control circuit (3) has a section (103) for checking the supply voltage, which generates a signal for enabling/disabling the processing section (1, 1A, 1B), **characterized in that** the power control circuit includes a configuration memory (203) containing data for configuring the processing program or parts of the processing program, which data is critical for the execution of said processing program, which memory (203) communicates with the processing section (1, 1A, 1B), whereas the check section (103) enables or disables access to the configuration memory (203) by the processing section (1, 1A, 1B) or communication between the configuration memory (203) and the processing section (1, 1A, 1B), otherwise it forces said configuration memory to send signals for disabling the processing section (1, 1A, 1B) or for setting the processing section to an operating condition in which it generates an output signal corresponding to a safe condition, when the supply voltage/s for the processing section do not correspond, within given tolerances, to the correct supply voltages for said processing section respectively.

**2.** A circuit as claimed in claim 1, **characterized in that** the configuration memory (203) is provided as a replaceable component and is mounted to the supply voltage check circuit board (3) by means of a mechanical and electrical press-fit or interlock coupling.

**3.** A circuit as claimed in claim 1, **characterized in that** the configuration memory (203) is provided as a separate device, which may be electrically and mechanically connected to the control circuit (3) and/or to the processing circuit (1).

**4.** A circuit as claimed in one or more of the preceding claims, **characterized in that** the configuration memory has a so-called two-out-of-two architecture and includes two storage units (63A, 63B) operating in parallel, and controlled for communication with the processing circuit (1) or one CPU thereof.

**5.** A circuit as claimed in one or more of the preceding claims, **characterized in that** the configuration memory (203) has its own dedicated DC/DC converter (73; 73A, 73B) for power supply, a separate and independent DC/DC converter (73; 73A, 73B) being provided, in the configuration memory, for each storage unit (63A, 63B).

**6.** A circuit as claimed in one or more of the preceding claims, **characterized in that** the supply voltage check section includes one voltage comparator (13) for detecting supply voltages above the nominal value provided for the supply voltage and one voltage comparator (23) for detecting supply voltages below the proper nominal value provided for the supply voltage, whereas the output signals from the two comparators (13, 23) control a logic circuit (33) for generating a signal to enable/disable communication with or access to the configuration memory (103).

**7.** A circuit as claimed in claim 6, **characterized in that** the logic device (53) for generating the signal to enable and disable communication with or access to the configuration memory (103) is a flip-flop having hold features.

**8.** A circuit as claimed in one or more of the preceding claims, **characterized in that** it has a reset circuit for restoring the condition in which communication with or access to the configuration memory (203) is enabled.

**9.** A circuit as claimed in one or more of the preceding claims, **characterized in that** each comparator is associated to a circuit (143, 243) for generating a test voltage higher and lower than proper nominal supply voltage respectively.

**10.** A circuit as claimed in claim 9, **characterized in that** the test voltage generating circuit (143, 243) is controlled by the processing circuit or the CPU (1) thereof.

**12.** A circuit as claimed in claim 9 or 10, **characterized in that** the test voltage generating circuits (143, 243) include a network of resistors having such values as to generate an input test signal to their respective comparator (13, 23), which is higher and lower to the proper nominal supply voltage respectively.

**13.** A circuit as claimed in one or more of the preceding claims 9 to 11, **characterized in that** each test voltage generating circuit (143, 243) comprises a static switch which is controlled by the processing circuit or the CPU (1) thereof.

**14.** A circuit as claimed in claims 12 and 13, **characterized in that** the static switch of each generating circuit (143, 243) of the test voltage closes or opens connection between the network of resistors and the input of their respective comparator (13, 23).

**15.** A circuit as claimed in one or more of the preceding claims, **characterized in that** the configuration memory (103) comprises at least one storage unit (63), which consists of an EEPROM memory.

**16.** A circuit as claimed in one or more of the preceding claims, **characterized in that** it is provided in combination with a two-out-of-two processing circuit, i.e. comprising two processing sections (1A, 1B) or two CPUs, which operate in parallel and are supplied with power by a common power source / AC/DC converter (2), the voltage control circuit being provided with two separate check sections (103A, 103B), each checking, independently of the other, for supply voltage values above or below the proper nominal supply voltage value, whereas the output signal from each power supply section is supplied to a logic device for generating a signal to enable/disable access to the configuration memory (203) by at least one or both processing sections or at least one or both CPUs (1A, 1B).

**17.** A circuit as claimed in claim 16, **characterized in that** each supply voltage check unit (103A, 103B) is uniquely associated and connected to a separate and independent configuration memory (203A, 203B), which is in turn only connected by a communication line to one of the two processing sections (1A, 1B) or one of the two CPUs, communication between said configuration memory (203A, 203B) and the corresponding processing section or CPU (1A, 1B) or access to said configuration memory by the corresponding processing section or CPU being enabled or disabled by a signal indicating a voltage above or below the proper nominal supply voltage, which is generated by the check section (103A, 103B) that is uniquely associated to said configuration memory (203A, 203B), each check section (103A, 103B) having a separate output for an enabling/disabling signal, connected to the configuration memory that is uniquely associated to said supply voltage check unit.

**18.** A circuit as claimed in claim 17, **characterized in that** access to the two configuration memories (203A, 203B) or communication therewith by one of the two processing sections and/or by one of the CPUs is disabled when any one of the two check sections (103A, 103B) detects a voltage above or below the proper nominal supply voltage, there being provided a common logic device (33) for generating the enabling/disabling signal for the two check sections (103, 103B).

**19.** A circuit as claimed in one or more of the preceding claims, **characterized in that** each of the two check sections has separate means for generating a test signal with a voltage above and a test signal with a voltage below the proper nominal supply voltage, which means are controlled by the processing section or the CPU which is uniquely associated to said check section (103A, 103B).

**20.** A circuit as claimed in one or more of the preceding claims, **characterized in that** each check section has a voltage comparator (13A, 13B) for detecting a voltage value above the proper nominal supply voltage and a comparator (23A, 23B) for detecting a voltage value below the proper nominal supply voltage, whereas the outputs of the comparators are connected to the input of a flip-flop having a hold feature (53).

**21.** A processing circuit having a so-called two-out-of-two architecture and comprising two processing sections (1A, 1B) or two CPUs operating in parallel and having a memory in which a processing program is loaded, **characterized in that**:
the two processing sections (1A, 1B) or the two CPUs are supplied with power by a single power source /AC/DC converter (2), there being provided a supply voltage control circuit, which circuit comprises two separate supply voltage check sections (103A; 103B) operating in parallel and independently of each other, whereas two external configuration memories (203A, 203B) are provided, each being connected by a communication line with one of the two processing sections or of the two CPUs (1A, 1B) respectively, whereas access to said configuration memories (203A, 203B) or communication with said two memories (203A, 203B) by the two processing sections or the two CPUs (1A, 1B) may be remotely enabled or disabled, and the remote control signal for enabling/disabling access to said configuration memories (203A; 203B) or communication with said two configuration memories (203A; 203B) by the two processing sections or the two CPUs (1A, 1B) is generated by the supply voltage check section (103A; 103B), connected to the corresponding configuration memory (203A, 203B);
the configuration memories (203A, 203B) containing parts of the processing program or data for configuring the processing program, which are critical for proper execution of the processing program by the processing sections or the CPUs.

**22.** A processing circuit as claimed in claim 21, **characterized in that**, alternatively, the control for enabling/disabling access to said configuration memories (203A, 203B) or communication with said two configuration memories (203A, 203B) by the two processing sections or the two CPUs (1A, 1B), is generated for both configuration memories (203A, 203B) by any one of the two supply voltage check sections.

**23.** A circuit as claimed on one or more of claims 21 to 23, **characterized in that** the supply voltage check sections (103A; 103B) and the configuration memories (203A, 203B) are as claimed in one or more of the preceding claims 1 to 20.

**24.** A system for controlling or monitoring railway, tramway or subway signaling systems, which comprises computerized means for executing a central control and monitoring program for the railway traffic signaling and/or monitoring system and at least one or more electronic operating units having a processing circuit, **characterized in that** said computerized means for executing the control and monitoring program and/or said at least one operating unit have a circuit for controlling power supply to the processing sections or the CPUs as claimed in one or more of claims 1 to 20.

**25.** A system for controlling or monitoring railway, tramway or subway signaling systems, which comprises computerized means for executing a central control and monitoring program for the railway traffic signaling and/or monitoring system and at least one or more electronic operating units having a processing circuit, **characterized in that** said computerized means for executing the control and monitoring program and/or said at least one operating unit have a processing circuit as claimed in one or more of claims 21 to 23.
